# EUROPÄISCHE PATENTSCHRIFT

(11) **EP 3 157 800 B1**
(45) Veröffentlichungstag und Bekanntmachung des Hinweises auf die Patenterteilung: **17.10.2018**
(21) Anmeldenummer: 15729843.1
(22) Anmeldetag: 17.06.2015
(51) Int. Cl.: B62D 1/184, B62D 1/19, B62D 1/187

(54) **LENKSÄULE FÜR EIN KRAFTFAHRZEUG**
STEERING COLUMN FOR A MOTOR VEHICLE
COLONNE DE DIRECTION POUR VÉHICULE AUTOMOBILE

(30) Priorität: 18.06.2014 DE 102014108577
(43) Veröffentlichungstag der Anmeldung: 26.04.2017
(73) Patentinhaber: ThyssenKrupp Presta AG, 9492 Eschen (LI); thyssenkrupp AG, 45143 Essen (DE)
(72) Erfinder: SAWALL, Stefan, CH-9473 Gams (CH); KREUTZ, Daniel, 6800 Feldkirch (AT); FORTE, Sebastian, 9493 Mauren (LI)
(74) Vertreter: thyssenkrupp Intellectual Property GmbH
(86) Internationale Anmeldenummer: PCT/EP2015/063597
(87) Internationale Veröffentlichungsnummer: WO 2015/193375

(56) Entgegenhaltungen:
- DE-A1-102008 016 742
- DE-C1- 19 617 561

## Beschreibung

### Technisches Gebiet

Die vorliegende Erfindung betrifft eine Lenksäule für ein Kraftfahrzeug, in welcher ein Stellelement gegenüber einem Tragelement verschiebbar ist, um eine Positionsverstellung eines Lenkrades und/oder ein Crash-System bereitzustellen.

### Stand der Technik

Es sind Lenksäulen bekannt, bei welchen ein Stellelement gegenüber einem Tragelement verschiebbar angeordnet ist. Beispielsweise kann ein Mantelrohr, in welchem die Lenkspindel einer Lenksäule drehbar gelagert ist, gegenüber dem Tragelement in Richtung der Lenkspindelachse verschiebbar angeordnet sein, um eine Verstellbarkeit der Position des an einem Ende der Lenkspindel angeordneten Lenkrades an die jeweilige Sitzposition des Fahrers zu ermöglichen. Weiterhin ist eine solche Verschiebbarkeit eines Stellelementes gegenüber dem Tragelement in Bezug auf die Crash-Sicherheit der Lenksäule von Bedeutung. Insbesondere wird häufig ein Zurückweichen des Lenkrades im Crash-Fall gefordert, insbesondere dann, wenn die Absorptionswirkung des Lenkradairbags aufgebraucht ist und der Fahrer auf das Lenkrad auftrifft. Hierbei ist es üblich, das Zurückweichen des Lenkrades durch die Anordnung eines Energieabsorptionselements zwischen dem Stellelement und dem Tragelement energieabsorbierend auszubilden. Ein Energieabsorptionselement kann beispielsweise über eine Verformung eines Blechstreifens oder ein Aufreißen eines Blechstreifens kinetische Energie absorbieren.

Entsprechend wird gefordert, dass sich das Stellelement gegenüber dem Tragelement einfach verschieben lässt, wenn eine Positionsverstellung des Lenkrades durchgeführt wird. Die Positionsverstellung des Lenkrades kann entweder durch den Fahrzeugführer manuell oder durch einen elektrischen, pneumatischen oder hydraulischen Verstellmechanismus erfolgen. Weiterhin ist ein definierter, fester Eingriff zwischen Tragelement und Stellelement im Fahrbetrieb und insbesondere im Crash-Fall gefordert, um zunächst eine definierte Abstützung des Airbags an dem Stellelement und dann ein energieabsorbierendes Zurückweichen des Stellelements gegenüber dem Tragelement zu ermöglichen, um die Crash-Energie über einen möglichst langen Weg für den Fahrer schonend abbauen zu können.

Unterschiedliche Systeme zur Verriegelung des Stellelements gegenüber dem Tragelement sind aus dem Stand der Technik bekannt. Dabei wird üblicherweise die Verriegelung des Stellelements gegenüber dem Tragelement, üblicherweise unter Zwischenschaltung eines Energieabsorptionselements, über einen Verstellmechanismus bereitgestellt, mittels welchem die Verschiebbarkeit des Stellelements gegenüber dem Tragelement zur Positionseinstellung an einen Fahrer vorgenommen wird.

Aus der DE 10 2008 016 742 B4 ist ein Sperrhaken bekannt, welcher durch die Betätigung des Klemmhebels eines Verstellmechanismus betätigt wird und beim Verschließen des Verstellmechanismus im Fahrbetrieb entsprechend in Eingriff mit einem Crash-Element kommt. Aus der DE 10 2008 034 803 B3 ist ebenfalls ein Sperrmechanismus bekannt, welcher durch den Hub des Klemmsystems des Verstellmechanismus betätigt wird. Entsprechend benötigen die Sperrvorrichtungen einen gewissen Hub des Klemmmechanismus und geben weiterhin die jeweilige Rastung bei der Positionierung des Stellelements im normalen Fahrbetrieb vor.

Die DE 196 17 561 C1, welche als nächstliegender Stand der Technik angesehen wird zeigt ein Crash-System, bei dem ein Schaltelement vorgesehen ist zum Bewirken des Eingreifens des Sperrelements in das Eingriffsteil im Crash-Fall, wobei das Schaltelement das Eingreifen aufgrund seiner Massenträgheit bewirkt. Die Bewegungsrichtung des Schaltelements ist verschieden von der Bewegungsrichtung des Sperrelements.

### Darstellung der Erfindung

Ausgehend von dem bekannten Stand der Technik ist es eine Aufgabe der vorliegenden Erfindung, eine Lenksäule bereitzustellen, welche eine verbesserte Positionierung des Lenkrads ermöglicht. Diese Aufgabe wird durch eine Lenksäule mit den Merkmalen des Anspruchs 1 gelöst. Vorteilhafte Weiterbildungen ergeben sich aus den Unteransprüchen.

Entsprechend wird eine Lenksäule für ein Kraftfahrzeug umfassend ein Tragelement und ein gegenüber dem Tragelement verschiebbares Stellelement zur drehbaren Lagerung einer Lenkspindel vorgeschlagen, umfassend eine Verriegelungsvorrichtung zum Verriegeln des Stellelements gegenüber dem Tragelement im Crash-Fall, wobei die Verriegelungsvorrichtung ein an dem Tragelement angeordnetes Sperrelement aufweist, welches mit einem Eingriffsteil des Stellelements in Eingriff bringbar ist. Erfindungsgemäß ist ein Schaltelement zum Bewirken des Eingreifens des Sperrelements in das Eingriffsteil im Crash-Fall vorgesehen, wobei das Schaltelement das Eingreifen aufgrund seiner Massenträgheit bewirkt, wobei die Bewegungsrichtung des Schaltelements verschieden ist von der Bewegungsrichtung des Sperrelements, und wobei das Sperrelement zum Eingreifen in einer Richtung im Wesentlichen senkrecht zur Achse der Lenkspindel bewegbar ist.

Die abrupte Verzögerung beim Crash-Fall bewirkt eine gezielte Verlagerung des Schaltelements aufgrund der wirkenden Massenträgheitskraft auf das Schaltelement in Fahrtrichtung, wobei die gezielte Verlagerung des Schaltelements das Eingreifen des Sperrelements in das Eingriffsteil bewirkt oder freigibt. Um eine Bewegung des Sperrelements in Richtung auf das Eingriffsteil des Stellelements zu ermöglichen, erfolgt die Verlagerung des Schaltelements in einer von dieser Richtung abweichenden, unterschiedlichen Bewegungsrichtung. Beispielsweise kann das Schaltelement in Fahrtrichtung in eine Auslöseposition bewegt werden, so dass das Sperrelement in einer Bewegungsrichtung quer, beispielsweise senkrecht zur Fahrtrichtung oder senkrecht zur Verschieberichtung des Stellelements mit dem Eingriffsteil in Eingriff gebracht werden kann. Unter dem Crash-Fall wird ein Fahrzeugfrontalaufprall verstanden, der eine Verzögerung des Fahrzeuges zur Folge hat.

Dadurch, dass das Schaltelement vorgesehen ist, welches das Eingreifen des Sperrelements aufgrund seiner Massenträgheit bewirkt, kann im normalen Fahrbetrieb auf eine Crash-sichere Verriegelung des Stellelements gegenüber dem Tragelement verzichtet werden. Hier kann vielmehr lediglich über eine auch stufenlos ausgestaltete Klemmung die Position des Stellelements gegenüber dem Tragelement festgelegt werden. Erst wenn im Crash-Fall eine vorgegebene Beschleunigung überschritten wird, wird mittels des Schaltelements aufgrund seiner Massenträgheit das Sperrelement in Eingriff gebracht, so dass die Bewegung des Stellelements bezüglich des Tragelementes gesperrt wird.

Das Sperrelement ist zum Eingreifen in einer Richtung im Wesentlichen senkrecht zur Achse der Lenkspindel bewegbar, nämlich bevorzugt in einem Winkelbereich von +/- 10° oder weniger. So kann eine möglichst hohe Verriegelungskraft und ein schnelles Schalten beziehungsweise Verriegeln bereitgestellt werden.

Unter der gesperrten Bewegung des Stellelements bezüglich des Tragelements ist die Bewegung zur Positionsverstellung des Stellelements zu verstehen, jedoch kann das Stellelement relativ zum Tragelement unter einer Energieabsorption verschiebbar sein.

Entsprechend kann auf diese Weise eine verbesserte Positionierung des Stellelements bezüglich des Tragelements im normalen Fahrbetrieb erreicht werden, da auf die geometrischen Verhältnisse eines Crash-Mechanismus nicht Rücksicht genommen werden muss.

Weiterhin ist auf diese Weise auch die Verwendung einer elektrischen Lenksäulenverstellung möglich, bei welcher über die jeweiligen elektromotorischen Antriebe keine Crash-Verriegelung bereitgestellt werden muss, so dass diese Antriebe entsprechend kostengünstiger dimensioniert werden können. Die eigentliche Crash-Verriegelung wird dann über das Sperrelement in Kombination mit dem beweglichen Schaltelement bereitgestellt, wobei das Schaltelement entsprechend aufgrund seiner Massenträgheit von der Ruheposition in die Schaltposition bewegt werden kann.

Bevorzugt ist das Sperrelement in die Sperrposition vorgespannt, so dass bei einem entsprechenden Schalten des Schaltelements das Sperrelement aufgrund seiner Vorspannung eine entsprechende Verriegelung zwischen dem Tragelement und dem Stellelement bereitstellt.

Bevorzugt ist das Schaltelement zwischen einer Ruheposition, in welcher das Sperrelement außer Eingriff mit dem Eingriffsteil gehalten wird, und einer Auslöseposition, in welcher das Sperrelement in Eingriff mit dem Eingriffsteil steht, bewegbar. Damit kann über das Schaltelement eine zuverlässige Auslösung der Verriegelung erreicht werden.

Bevorzugt ist das Schaltelement durch das Sperrelement ausgebildet und die Massenträgheit des Sperrelements bewirkt das Eingreifen. Auf diese Weise kann auf weitere Schaltelemente verzichtet werden und es wird eine einfache und kostengünstige Ausbildung erreicht.

Bevorzugt ist das Sperrelement als Sperrstein ausgebildet, welcher in einer Sperrelementaufnahme an dem Tragelement in Fahrzeugbewegungsrichtung bewegbar angeordnet ist. Dabei ist es besonders bevorzugt, wenn das Sperrelement in einem Hinterschnitt in der Sperrelementaufnahme in einer Ruheposition gehalten wird, da ein solcher Aufbau mit wenigen Teilen und entsprechend kostengünstig erreicht werden kann. Ein definiertes Auslösen des Eingreifens kann dadurch erreicht werden, dass zwischen dem Hinterschnitt der Sperrelementaufnahme und einem Halteabschnitt des Sperrelements ein Wälzelement angeordnet ist. Wälzelemente können als klassische Wälzkörper wie Kugeln, Zylinderrollen oder Nadeln ausgeführt sein.

In einer bevorzugten Weiterbildung ist das Sperrelement selbsthemmend ausgebildet und weist insbesondere eine in Fahrtrichtung gerichtete Keilfläche auf, welche mit einer Gegenkeilfläche der Sperrelementaufnahme im Crash-Fall in Anlage bringbar ist, um eine Selbsthemmung des Sperrelements zu erreichen. Auf diese Weise kann eine sichere Verriegelung unabhängig von einer Vorspannfeder erreicht werden.

Bevorzugt weist das Schaltelement einen Massenkörper auf und hält das Sperrelement über einen Verriegelungsstift in einer Ruheposition. Besonders bevorzugt ist dabei, den Verriegelungsstift über Wälzkörper in einer Verriegelungsnut des Sperrelements zu lagern. Der Verriegelungsstift kann über einen Hebelarm mit dem Massekörper verbunden sein, um eine Erhöhung der Auslösekraft oder eine Reduzierung der Masse des Massekörpers zu erreichen.

Besonders bevorzugt sind mindestens zwei Verriegelungsvorrichtungen vorgesehen, bevorzugt auf einander gegenüberliegenden Seiten des Stellelements, um eine Redundanz aufzubauen oder die einzelnen Verriegelungsvorrichtungen kleiner dimensionieren zu können. Weiterhin ist es möglich mit mindestens zwei Verriegelungsvorrichtungen eine Abhängigkeit von der unmittelbar vor dem Crash-Fall vorhandenen Fahrzeuggeschwindigkeit und der wirkenden Verzögerung im Crash-Fall zu schaffen. Dafür können die Massenträgheiten der Schaltelemente so angepasst und variiert werden, dass entweder nur ein oder mehrere Schaltelemente auf Grund deren wirkenden Massenträgheitskraft den Eingriff des jeweiligen Sperrelements bewirken.

Zum zuverlässigen Abbau von Crash-Energie ist das Eingriffsteil bevorzugt als Energieabsorptionselement ausgestaltet. Als Energieabsorptionselement kann dabei eine Baugruppe aus Langloch und Verdrängungsbolzen dienen, bei dem durch eine Verschiebung des Verdrängungsbolzens, der mit dem Eingriffsteil verbunden ist, in dem Langloch eine Verformung oder Aufweitung des Langlochs bewirkt und somit Energie absorbiert wird.

Weiterhin kann das Eingriffsteil mit einem Biegestreifen, Biegedraht oder einer Biegereißlasche zusammenwirken, wobei durch die plastische Deformation die Crash-Energie absorbiert wird.

Das Sperrelement kann ebenfalls als Hobel ausgeführt sein, der mit dem Eingriffsteil so in Eingriff steht, dass ein Span bei einer Verschiebung zwischen Sperrelement und Eingriffsteil aufgrund der Hobelkontur des Sperrelements von dem Eingriffsteil abgetrennt wird.

Das Schaltelement kann als separates Element vorgesehen sein, welches ein in Sperrrichtung vorgespanntes Sperrelement in einer Ruheposition hält, und welches dann aufgrund seiner Massenträgheit beim Überschreiten einer bestimmten Beschleunigung beziehungsweise eines bestimmten Impulses im Crash-Fall bewegt wird und entsprechend das Sperrelement freigibt. Um die notwendigen Betätigungskräfte, insbesondere gegen die Vorspannung des Sperrelements, überwinden zu können, kann das Schaltelement entweder mit einer entsprechend hohen trägen Masse versehen sein, oder aber es kann über einen Hebelmechanismus die entsprechende Massenträgheit so ausnutzen, dass ein zuverlässiges Bewegen von der Ruheposition in die Auslöseposition auch unter der Vorspannung des Sperrelements gegeben ist.

In einer weiteren bevorzugten Ausführung ist das Sperrelement selbst gleichzeitig als Schaltelement ausgebildet. Hierbei kann das Sperrelement unter Vorspannung und in Richtung der Drehachse der Lenkspindel verschieblich in einer entsprechenden Halterung angeordnet sein, um beim Einwirken eines Impulses entsprechend aus einer Ruheposition in die Auslöseposition bewegt zu werden um dann aufgrund der Vorspannung des Sperrelements die Bewegung des Stellelements bezüglich des Tragelements zu spannen.

In einer weiteren bevorzugten Ausführung ist das Sperrelement unter Vorspannung und in einem Winkel zu der Drehachse der Lenkspindel verschiebbar in einer entsprechenden Halterung angeordnet, um beim Einwirken eines Impulses entsprechend aus einer Ruheposition in die Auslöseposition bewegt zu werden, um dann aufgrund der Vorspannung des Sperrelements die Bewegung des Stellelements bezüglich des Tragelements zu spannen. Der Winkel zur Drehachse der Lenkspindel ist vorzugweise so gewählt, dass die Verschiebung des Sperrelements horizontal oder mit anderen Worten parallel zur Fahrbahn, auf dem sich das Kraftfahrzeug befindet, erfolgt.

Eine vorteilhafte Ausführungsform der Erfindung sieht vor, dass das Sperrelement andem Tragelement in einer Sperrelementaufnahme angeordnet ist und mittels einer Vorspannfeder in Richtung auf das Eingriffsteil vorgespannt ist, wobei das Sperrelement im Crashfall beziehungsweise beim Aufbringen einer entsprechend hohen Beschleunigung oder eines entsprechend hohen Impulses auf das Schaltelement aufgrund der Vorspannung der Vorspannfeder mit dem Eingriffsteil in Eingriff bringbar ist. Die Vorspannfeder übt eine Federkraft auf das Sperrelement aus, durch welche das Sperrelement in Richtung auf das Eingriffsteil bewegt werden kann, wenn die Bewegung im Crashfall freigegeben wird. Die Freigabe im Crashfall erfolgt dadurch, dass das Schaltelement aufgrund seiner Massenträgheit relativ zur Sperrelementaufnahme in eine Bewegungsrichtung bewegt wird, welche sich von der Bewegungsrichtung des Sperrelements in der Sperrelementaufnahme in Richtung auf das Eingriffsteil unterscheidet.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: eine schematische perspektivische Ansicht einer Lenksäule;
- Figur 2: eine schematische Seitenansicht der Lenksäule aus Figur 1;
- Figur 3: eine schematische perspektivische Ansicht des Stellelements sowie eines Sperrelements der Lenksäule aus den vorhergehenden Figuren;
- Figur 4: eine schematische Längsschnittdarstellung durch die Lenksäule der vorhergehenden Figuren;
- Figur 5: eine Detaildarstellung des in den vorhergehenden Figuren gezeigten Sperrelements;
- Figur 6: eine schematische Schnittdarstellung eines Sperrelements in einer weiteren Ausführungsform;
- Figur 7: eine schematische Schnittdarstellung eines Sperrelements noch in einer weiteren Ausführungsform;
- Figur 8: eine schematische Schnittdarstellung eines Sperrelements noch in einer weiteren Ausführungsform;
- Figur 9: eine schematische Schnittdarstellung eines Sperrelements noch in einer weiteren Ausführungsform mit einem über einen Hebelmechanismus angelenkten Schaltelement;
- Figur 10: eine schematische Schnittdarstellung eines Sperrelements noch in einer weiteren Ausführungsform mit einem über einen Hebelmechanismus angelenkten Schaltelement;
- Figur 11: eine schematische Schnittdarstellung durch eine weitere Lenksäule, welche zwei Sperrelemente aufweist;
- Figur 12: eine schematische perspektivische Darstellung des Eingriffs eines Sperrelements in ein Energieabsorptionselement; und
- Figur 13: eine Detaildarstellung des in der Figur 5 gezeigten Sperrelements im Eingriff.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen bezeichnet und auf eine wiederholte Beschreibung dieser Elemente wird in der nachfolgenden Beschreibung teilweise verzichtet, um Redundanzen zu vermeiden.

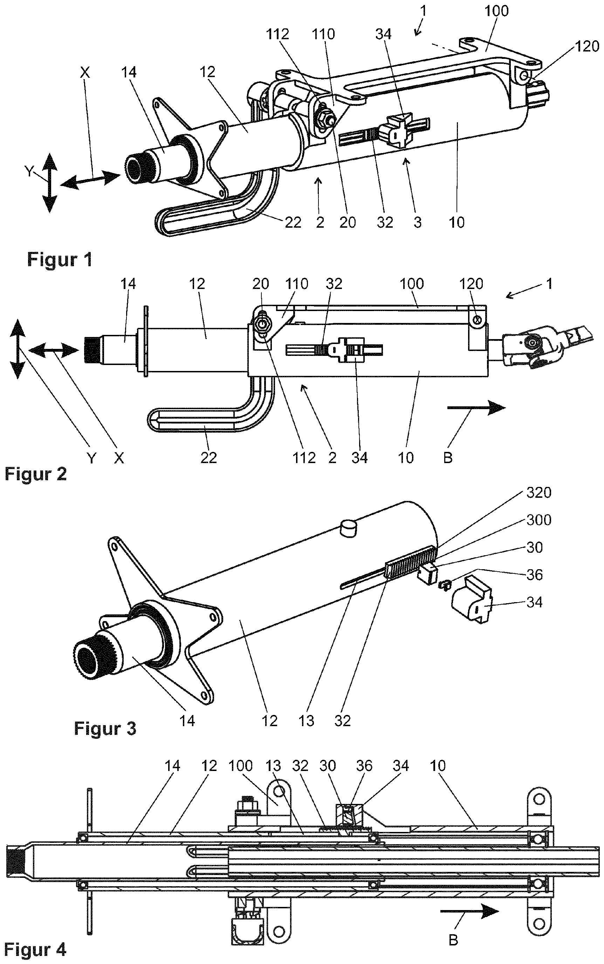

In den Figuren 1 bis 5 ist eine Lenksäule 1 in einem ersten Ausführungsbeispiel gezeigt, wobei ein Tragelement 10 und ein dem gegenüber verstellbares Stellelement 12 vorgesehen sind. Das Stellelement 12 ist als Mantelrohr ausgebildet und lagert die Lenkspindel 14 drehbar. Die Lenkspindel 14 dient in bekannter Weise dazu, den von einem Fahrer über ein an dem dem Fahrer zugewendeten Ende der Lenkspindel 14 angeordneten Lenkrad eingetragenen Lenkbefehl in das Lenksystem zu übertragen.

Das Tragelement 10 ist über Konsolenteile 100 fest mit dem Chassis des Kraftfahrzeugs verbindbar. Das Tragelement 10 ist in dem gezeigten Ausführungsbeispiel um eine Verschwenkachse 120 herum verschwenkbar, um eine Höhenverstellung des Stellelements 12 in Verschwenkrichtung Y zu ermöglichen. Das Stellelement 12 ist gegenüber dem Tragelement 10 in Verschieberichtung X verschiebbar, um entsprechend eine Längsverstellung bereitzustellen.

Das Tragelement 10 stellt im gezeigten Ausführungsbeispiel eine Klemmhülse für das Stellelement 12 bereit, so dass das Stellelement 12 gegenüber dem Tragelement 10 über einen Klemmmechanismus 2 verschiebefest über einen Kraftschluss gehalten werden kann. Hierzu ist eine Klemmachse 20 vorgesehen, welche mittels eines Klemmhebels 22 betätigt werden kann und welche in Wangen 110 des Konsolenteils 100 in einem sich im Wesentlichen in Verschwenkrichtung Y erstreckenden Langloch 112 angeordnet ist. Ist der Klemmmechanismus 2 durch ein entsprechendes Verschwenken des Klemmhebels 22 und damit Betätigen eines Nockenmechanismus verriegelt, werden die Wangen 110 des Konsolenteils 100 nach innen gespannt, wodurch gleichzeitig auch das als Klemmhülse ausgebildete Tragelement 10 so vorgespannt wird, dass eine Verschiebung des Stellelementes 12 in Verschieberichtung X genauso wie eine Verschwenkung des Stellelementes 12 um die Verschwenkachse 120 herum durch den Kraftschluss unterbunden wird. Entsprechend ist aufgrund des einfachen Klemmmechanismus eine stufenlose Verstellung des Stellelementes 12 sowohl in Verschwenkrichtung Y als auch in Verschieberichtung X möglich.

Um im Crash-Fall jedoch eine sichere Verriegelung des Stellelementes 12 gegenüber dem Tragelement 10 zu erreichen und entsprechend zu vermeiden, dass das Stellelement 12 im Crash-Fall einfach in das Tragelement 10 herein geschoben wird, ist eine Verriegelungsvorrichtung 3 vorgesehen. Die Verriegelungsvorrichtung 3 wird im Nachfolgenden detailliert in mehreren Ausführungsformen beschrieben. In dem in Figur 1 bis 5 gezeigten Ausführungsbeispiel umfasst die Verriegelungsvorrichtung 3 ein Sperrelement 30, welches als Sperrstein ausgebildet ist und welches an einer dem Stellelement 12 zugewendeten Seite eine Verzahnung 300 aufweist. Die Verzahnung 300 kann in eine entsprechende Gegenverzahnung 320 eines am Stellelement 12 angeordneten Eingriffsteils 32 eingreifen und entsprechend eine Verriegelung des Stellelements 12 gegenüber dem Tragelement 10 bewirken. Das Sperrelement 30 stützt sich entsprechend am Tragelement 10 ab.

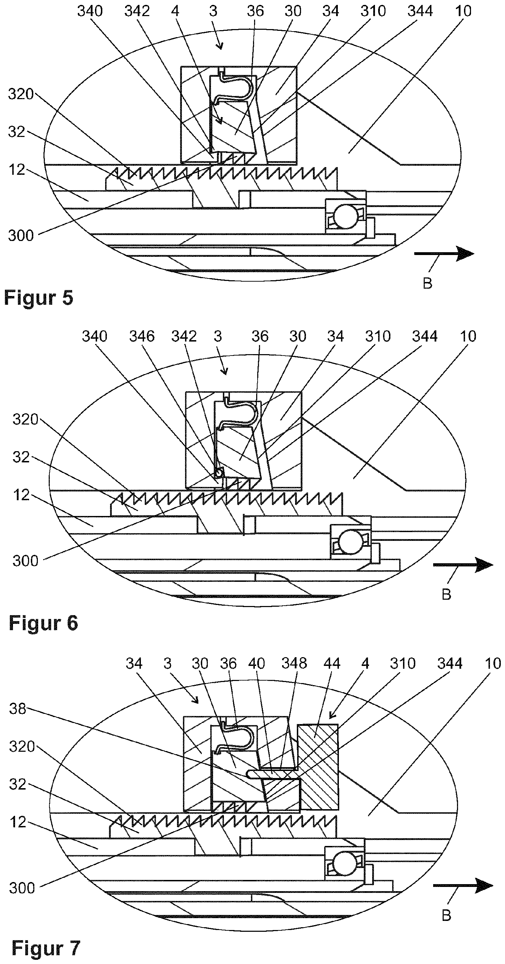

Das Sperrelement 30 ist an dem Tragelement 10 in einer Sperrelementaufnahme 34 angeordnet und mittels einer Vorspannfeder 36 in Richtung auf das Eingriffsteil 32 zu vorgespannt. Diese Anordnung ist besonders gut in Figur 5 zu erkennen. In der in den Figuren gezeigten Ruheposition steht das Sperrelement 30 nicht mit dem Eingriffsteil 32 in Eingriff, so dass das Sperrelement 30 gegenüber dem Tragelement 10 ungehindert in der Verschieberichtung X verschoben werden kann und entsprechend bei geöffnetem Klemmmechanismus 2 eine stufenlose Positionseinstellung des Lenkrads vorgenommen werden kann.

Das Sperrelement 30 wird in der Ruheposition an einem Hinterschnitt 340 der Sperrelementaufnahme 34 gehalten. Insbesondere wird ein Halteabschnitt 342 des Sperrelements 30 mittels der Vorspannfeder 36 in den Hinterschnitt 340 vorgespannt, so dass das Sperrelement 30 in der Ruheposition sicher in der Sperrelementaufnahme 34 gehalten ist. In dem gezeigten Ausführungsbeispiel sind Halteabschnitt 342 und Hinterschnitt 340 leicht keilförmig ausgestaltet, so dass durch das Aufbringen der Vorspannung mittels der Vorspannfeder 36 das Sperrelement 30 in die in Figur 5 gezeigte Ruheposition vorgespannt ist und auch in dieser Position gehalten wird. Insbesondere im regulären Fahrbetrieb kann auf diese Weise vermieden werden, dass das Sperrelement 30 aufgrund von Fahrzeugvibrationen seine durch den Hinterschnitt 340 und den Halteabschnitt 342 definierte Ruheposition verlässt.

In einer nicht gezeigten Ausführungsform kann das Sperrelement 30 im regulären Fahrbetrieb durch eine Magnetkraft eines Magneten in seiner Ruheposition gehalten werden, wodurch auf die keilförmige Ausführung des Hinterschnitts verzichtet werden kann.

Die Sperrelementaufnahme 34 ist allerdings so dimensioniert, dass das Sperrelement 30 in Fahrtrichtung B bewegt werden kann. Im Crash-Fall wird damit durch die Masse des Sperrelementes 30 das Sperrelement 30 gleichzeitig zu seinem eigenen Schaltelement 4, welches das Sperrelement 30 aufgrund seiner trägen Masse aus der Ruheposition in eine Auslöseposition bewegt. Durch die träge Masse sorgt das Schaltelement 4 dafür, dass sich das Sperrelement 30 innerhalb der Sperrelementaufnahme 34 in Fahrtrichtung B bewegt, also im gezeigten Ausführungsbeispiel nach rechts, und entsprechend aus der durch den Hinterschnitt 340 und den Halteabschnitt 342 gebildeten Ruheposition herausrutscht. Aufgrund der Vorspannfeder 36 wird das Sperrelement 30 dann schlagartig mit seiner Verzahnung 300 in Eingriff mit dem Eingriffsteil 32 und dessen Gegenverzahnung 320 gebracht.

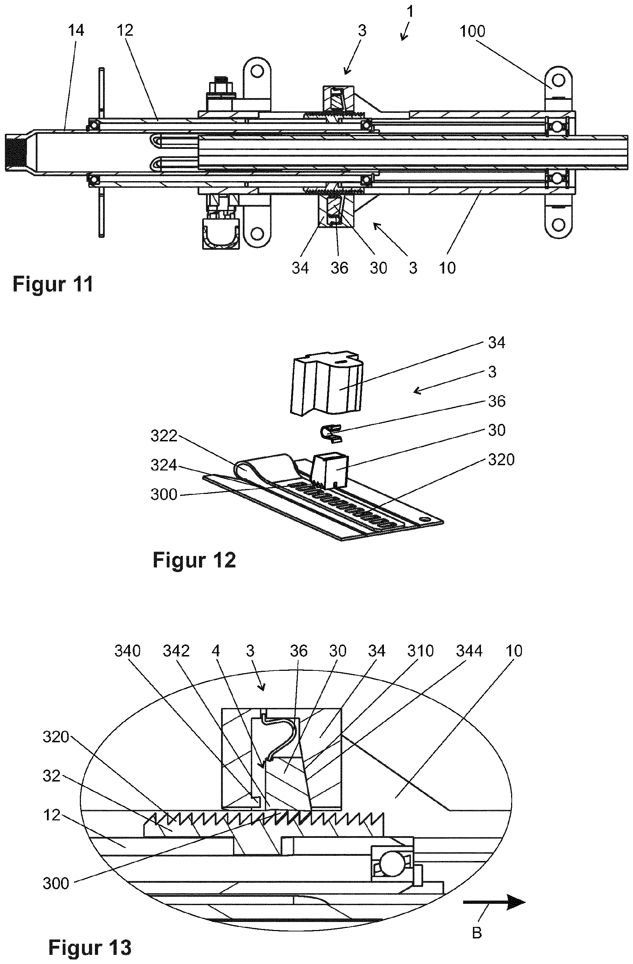

Damit wird im Crash-Fall beziehungsweise beim Aufbringen einer entsprechend hohen Beschleunigung oder eines entsprechend hohen Impulses auf das Schaltelement 4 das Sperrelement 30 aus seiner Ruheposition in der Figur 5 in Fahrtrichtung B nach rechts in die Auslöseposition bewegt und das Sperrelement 30 dann aufgrund der Vorspannung der Vorspannfeder 36 in Eingriff mit dem Eingriffsteil 32 gebracht. In der Figur 13 ist die entsprechende Sperrposition der Verriegelungsvorrichtung 3 der Figur 5 dargestellt, bei der die Verzahnung 300 des Sperrelement 30 mit der Gegenverzahnung 320 des Eingriffsteil 32 in Eingriff steht.

Befindet sich die Verriegelungsvorrichtung 3 in der Sperrposition so kann die Energieabsorption durch die relativen Verschiebung zwischen dem fixierten Eingriffsteil 32 und dem Stellelement 12 und der damit verbundenen Verformung bzw. Aufweitung des Schlitzes 13 erfolgen.

Hieraus ergibt sich, dass die Lenksäule 1, welche in den Figuren 1 bis 5 gezeigt ist, im normalen Fahrbetrieb im Wesentlichen stufenlos in ihrer Position und insbesondere entlang der Verschieberichtung X des Stellelementes 12 gegenüber dem Tragelement 10 verschoben werden kann. Über den einfachen Klemmmechanismus 2 kann entsprechend eine stufenlose Verstellung erreicht werden.

Eine Crash-Verriegelung durch die Verriegelungsvorrichtung 3 findet entsprechend nur dann statt, wenn sie im Crash-Fall auch tatsächlich benötigt wird. Während des normalen Fahrbetriebs hingegen findet lediglich eine Klemmung des Stellelements 12 gegenüber dem Tragelement 10 mittels des Klemmmechanismus 2 statt, so dass hier flexibel und stufenlos die Position des Lenkrades an den jeweiligen Fahrer angepasst werden kann.

Die Verriegelungsvorrichtung 3 in Kombination mit dem Schaltelement 4 kann auf mechanisch besonders einfache Weise, welche entsprechend in Figur 5 schematisch angedeutet ist, ausgebildet werden.

Um die Sperrwirkung des Sperrelements 30 im Crash-Fall weiter zu verbessern, weist das Sperrelement 30 an seiner in Fahrtrichtung B nach vorne weisenden Seite eine Keilfläche 310 auf, welche an einer entsprechend komplementären Gegenkeilfläche 344 der Sperrelementaufnahme 34 zur Anlage kommt, wenn das Sperrelement 30 aus seiner in Figur 5 gezeigten Ruheposition in die Auslöseposition gebracht wird. Durch die träge Masse des dann als Schaltelement 4 wirkenden Sperrelements 30 kommt die Keilfläche 310 in Anlage mit der Gegenkeilfläche 344 der Sperrelementaufnahme 34. Damit wird das Sperrelement 30 quasi selbsthemmend auf das Eingriffsteil 32 gedrückt, insbesondere dann, wenn das Stellelement 12 gegenüber dem Tragelement 10 in Fahrtrichtung B bewegt wird. Entsprechend stellt die Verriegelungsvorrichtung 3 durch die Ausbildung der Keilfläche 310 und der Gegenkeilfläche 344 eine selbsthemmende Verriegelung bereit, welche unabhängig von der Vorspannung der Vorspannfeder 36 wird.

In Figur 6 ist eine alternative Verriegelungsvorrichtung 3 gezeigt, welche einen im Wesentlichen ähnlichen Aufbau aufweist, wie der in Figur 5 gezeigte, wobei jedoch zwischen dem Hinterschnitt 340 der Sperrelementaufnahme 34 und dem Halteabschnitt 342 des Sperrelements 30 ein Wälzelement 346 so angeordnet ist, dass ein definiertes Auslösen des dann als Schaltelement 4 dienenden Sperrelements 30 aus der in Figur 6 gezeigten Ruheposition in die Aktivierungsposition erreicht wird, wenn eine entsprechende Beschleunigung beziehungsweise ein entsprechender Impuls in Fahrtrichtung B auf das Schaltelement 4 ausgeübt wird. Durch das Bereitstellen des Wälzelementes 346 kann insbesondere vermieden werden, dass durch das direkte Aufeinanderpressen der Flächen des Hinterschnitts 340 und des Halteabschnitts 342, so wie es in Figur 5 gezeigt ist, ein nicht mehr definiertes Schaltverhalten des Schaltelementes 4 aufgrund von Korrosion oder sich verändernden Oberflächeneigenschaften erreicht wird. Durch das Verwenden eines Wälzelementes 346 kann ein definierteres Auslöseverhalten des Schaltelementes 4 erreicht werden, wobei die zum Auslösen erforderliche Masse des Schaltelements 30 reduziert werden kann, da diese Ausführungsvariante eine geringere Systemreibung aufweist, als die in der Figur 5 gezeigte Verriegelungsvorrichtung.

In Figur 7 ist ein weiteres Ausführungsbeispiel der Verriegelungsvorrichtung 3 gezeigt, bei welcher neben dem Sperrelement 30, welches über eine Vorspannfeder 36 in der Sperrelementaufnahme 34 aufgenommen ist, ein separates Schaltelement 4 mit einem Massekörper 44 vorgesehen ist, welches einen Verriegelungsstift 40 aufweist, der in eine entsprechende Verriegelungsnut 38 des Sperrelements 30 eingreift. Der Verriegelungsstift 40 greift dabei durch eine Ausnehmung 348 in der Sperrelementaufnahme 34 hindurch, so dass im normalen Fahrbetrieb das durch die Vorspannfeder 36 vorgespannte Sperrelement 30 in der Ruheposition gehalten wird. Beim Auftreten einer hohen Beschleunigung beziehungsweise eines entsprechenden Impulses wird das Schaltelement 4 jedoch aufgrund der Trägheit des Massekörpers 44 in dem in Figur 7 gezeigten Ausführungsbeispiel relativ zu der Sperrelementaufnahme 34 und relativ zu dem Sperrelement 30 in Fahrrichtung B nach vorne bewegt, derart, dass der Verriegelungsstift 40 außer Eingriff mit der Verriegelungsnut 38 kommt. Entsprechend wird die in der Vorspannfeder 36 gespeicherte Energie frei und das Sperrelement 30 kommt mit seiner Verzahnung 300 in Eingriff mit der Gegenverzahnung 320 des Eingriffsteils 32.

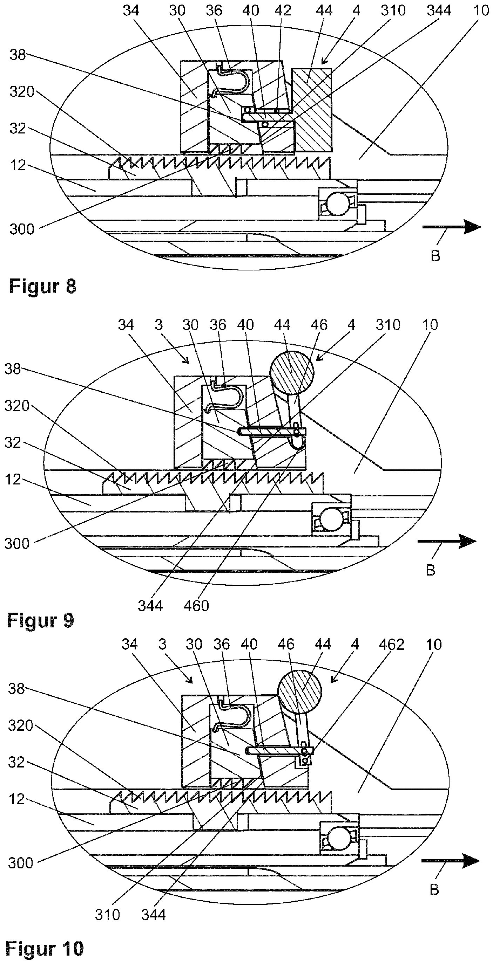

In Figur 8 ist ein weiteres Ausführungsbeispiel gezeigt, bei welchem ein Schaltelement 4 vorgesehen ist, welches einen ähnlichen Aufbau zeigt, wie das in Figur 7 gezeigte, wobei hier jedoch zusätzlich Wälzelemente 42 vorgesehen sind, über welche der Verriegelungsstift 40 sowohl in der Sperrelementaufnahme 34 als auch in der Verriegelungsnut 38 des Sperrelements 30 und der Ausnehmung 348 in der Sperrelementaufnahme 34 gelagert ist. Auf diese Weise kann ein zuverlässiges Herausziehen beziehungsweise Außereingriffbringen des Verriegelungsstiftes 40 aus der Verriegelungsnut 38 erreicht werden, wenn eine vorbestimmte Beschleunigung beziehungsweise ein vorbestimmter Impuls überschritten wurde. Das Schaltelement 4 wird hier wiederum in Fahrtrichtung B nach vorne außer Eingriff mit dem Sperrelement 30 gebracht, so dass die in der Vorspannfeder 36 gespeicherte Energie das Sperrelement 30 senkrecht zur Fahrtrichtung B in Eingriff mit dem Eingriffsteil 32 bringen kann, und entsprechend eine Verriegelung des Eingriffteils 32 gegenüber dem Tragelement 10 in Verschieberichtung X sowie in Fahrtrichtung B erreicht und eine Energieabsorption durch die relative Verschiebung von Stellelement 12 zum Eingriffsteil 32 und der damit verbundenen Umformung des Schlitzes 13 durch das Eingriffsteil 32 zu ermöglichen.

In Figur 9 ist ein weiteres Ausführungsbeispiel gezeigt, wobei das Schaltelement 4 hier über einen Hebelarm 46 mit einem Verriegelungsstift 40 verbunden ist. Der Verriegelungsstift 40 greift wiederum in eine Verriegelungsnut 38 des über eine Vorspannfeder 36 in Verriegelungsrichtung vorgespannten Sperrelementes 30 ein. Ein Massenkörper 44 ist vorgesehen, welcher über den Hebelarm 46 auf den Verriegelungsstift 40 wirkt. Entsprechend kann die Kraft, welche durch die Massenträgheit des Massenkörpers 44 beziehungsweise des Schaltelementes 4 auf den Verriegelungsstift 40 aufgebracht wird, über den Hebelarm 46 vergrößert werden. Damit kann die Masse des Massenkörpers 44 entweder verringert werden, oder die Vorspannung der Vorspannfeder 36 kann erhöht werden, wobei dann immer noch ein sicheres Auslösen des Sperrelementes 30 erreicht wird. Der Hebelarm 46 ist in dem gezeigten Ausführungsbeispiel in einem Lagerbereich 460 aufgenommen, ohne dass hier eine besondere Fixierung stattfindet. Um ein Verklemmen des Hebelarms 46 während dem Außereingriffbringen des Verriegelungsstiftes 40 aus der Verriegelungsnut 38 zu vermeiden, weist die Kopplung zwischen Hebelarm 46 und dem Verriegelungsstift 40 ein Langloch auf, um einen Verschiebungsausgleich zu gewährleisten.

In dem in Figur 10 gezeigten Ausführungsbeispiel ist im Prinzip ein ähnlicher Aufbau gezeigt, wie der in Figur 9. Hier ist lediglich der Hebelarm 46 um eine definierte Schwenkachse 462 herum verschwenkbar angeordnet, so dass ein definiertes Verschwenken des Massenkörpers 44 um die Schwenkachse 462 herum erreicht werden kann, um den Verriegelungsstift 40 außer Eingriff mit der Verriegelungsnut 38 zu bewegen.

In Figur 11 ist eine Lenksäule 1 in einer schematischen Darstellung gezeigt, wobei zwei Verriegelungsvorrichtungen 3 vorgesehen sind, welche auf gegenüberliegenden Seiten des Tragelementes 10 auf das Stellelement 12 wirkend angeordnet sind. Auf diese Weise kann entweder eine redundante Auslegung der Verriegelungsvorrichtung 3 erreicht werden, oder aber die einzelnen Verriegelungsvorrichtungen können kleiner dimensioniert werden, um beispielsweise den Bauraum zu reduzieren oder den Materialeinsatz zu verringern. Weiterhin wird die über die beiden Verriegelungsvorrichtungen bereitgestellte Verriegelung zu einer symmetrischen Verriegelung des Stellelements 12 gegenüber dem Tragelement 10 führen, so dass im Crash-Fall eine sichere Verriegelung erreicht wird.

In Figur 12 ist schematisch eine Verriegelungsvorrichtung 3 gezeigt, bei welcher das Sperrelement 30 mit seiner Verzahnung 300 in die Gegenverzahnung 320 eines als Energieabsorptionselement ausgebildeten Eingriffsteils 32 eingreift. Das als Energieabsorptionselement ausgebildete Eingriffsteil 32 weist hierzu eine Blechlasche 322 auf, welche entlang von Reißlinien 324 aufreißen kann und gleichzeitig eine Verformung der Blechlasche 322 im Crash-Fall stattfindet.

Entsprechend kann über die Verriegelungsvorrichtung 3 ein sicheres Verriegeln des Stellelements 12 an dem Tragelement 10 erreicht werden, und gleichzeitig eine Energieabsorption mittels des als Energieabsorptionselement ausgebildeten Eingriffsteils 32 erreicht werden. Das Eingriffsteil 32, welches hier als Energieabsorptionsteil ausgebildet ist, kann fest mit dem Stellelement 12 so verbunden sein, dass bei einer Verriegelung über einen Eingriff des Sperrelements 30 entsprechend das Tragelement 10 gegenüber dem Stellelement 12 unter Zwischenschaltung des Energieabsorptionselementes in Form des Eingriffsteils 32 verriegelt sind und eine Verschiebung der Stelleinheit 12 gegenüber des Tragelements 10 zu einer Energieabsorption durch die plastische Deformation des Energieabsorptionselements erfolgt.

In einer nicht gezeigten Ausführungsform kann das Eingriffsteil 32 unlösbar oder einstückig mit der Stelleinheit 12 verbunden sein, sodass nach dem Eingriff der Verzahnung 300 des Sperrelements in die Gegenverzahnung 320 des Eingriffselement ein relative Verschiebung der Stelleinheit 12 gegenüber des Tragelements 10 verhindert wird.

Die in den zuvor beschriebenen Ausführungsvarianten verwendete Verzahnung 300 und Gegenverzahnung 320 kann stets durch eine andere formschlüssige Verrastung, wobei diese ein oder mehrere Formschlusselemente und entsprechende korrespondierende Gegenformschlusselemente die miteinander in Eingriff bringbar sind, ersetzt werden.

Soweit anwendbar, können alle einzelnen Merkmale, die in den einzelnen Ausführungsbeispielen dargestellt sind, miteinander kombiniert und/oder ausgetauscht werden, ohne den Bereich der Erfindung zu verlassen.

### Bezuqszeichenliste

- 1: Lenksäule
- 10: Tragelement
- 12: Stellelement
- 13: Schlitz
- 14: Lenkspindel
- 100: Konsolenteil
- 110: Wange
- 112: Langloch
- 120: Verschwenkachse
- 2: Klemmmechanismus
- 20: Klemmachse
- 22: Klemmhebel
- 3: Verriegelungsvorrichtung
- 30: Sperrelement
- 32: Eingriffsteil
- 34: Sperrelementaufnahme
- 36: Vorspannfeder
- 38: Verriegelungsnut
- 300: Verzahnung
- 310: Keilfläche
- 320: Gegenverzahnung
- 322: Blechlasche
- 324: Reißlinie
- 340: Hinterschnitt
- 342: Halteabschnitt
- 344: Gegenkeilfläche
- 346: Wälzelement
- 348: Ausnehmung
- 4: Schaltelement
- 40: Verriegelungsstift
- 42: Wälzelement
- 44: Massekörper
- 46: Hebelarm
- 460: Lagerbereich
- 462: Schwenkachse
- X: Verschieberichtung
- Y: Verschwenkrichtung
- B: Fahrtrichtung

## Patentansprüche

1. Lenksäule (1) für ein Kraftfahrzeug, umfassend ein Tragelement (10) und ein gegenüber dem Tragelement (10) verschiebbares Stellelement (12) zur drehbaren Lagerung einer Lenkspindel (14), umfassend eine Verriegelungsvorrichtung (3) zum Verriegeln des Stellelements (12) gegenüber dem Tragelement (10) im Crash-Fall, wobei die Verriegelungsvorrichtung (3) ein an dem Tragelement (10) angeordnetes Sperrelement (30) aufweist, welches mit einem Eingriffsteil (32) des Stellelements (12) in Eingriff bringbar ist, wobei ein Schaltelement (4) vorgesehen ist zum Bewirken des Eingreifens des Sperrelements (30) in das Eingriffsteil (32) im Crash-Fall, wobei das Schaltelement (4) das Eingreifen aufgrund seiner Massenträgheit bewirkt, wobei die Bewegungsrichtung des Schaltelements (4) verschieden ist von der Bewegungsrichtung des Sperrelements (30),
**dadurch gekennzeichnet,**
**dass** das Sperrelement (30) zum Eingreifen in einer Richtung im Wesentlichen senkrecht zur Achse der Lenkspindel (14) bewegbar ist.

2. Lenksäule (1) gemäß Anspruch 1, **dadurch gekennzeichnet, dass** das Schaltelement (4) zwischen einer Ruheposition, in welcher das Sperrelement (30) außer Eingriff mit dem Eingriffsteil (32) gehalten wird, und einer Auslöseposition, in welcher das Sperrelement (30) in Eingriff mit dem Eingriffsteil (32) steht, bewegbar ist.

3. Lenksäule (1) gemäß einem der vorstehenden Ansprüche, **dadurch gekennzeichnet, dass** das Schaltelement (4) durch das Sperrelement (30) ausgebildet ist, und die Massenträgheit des Sperrelements (30) das Eingreifen bewirkt.

4. Lenksäule (1) gemäß einem der vorstehenden Ansprüche, **dadurch gekennzeichnet, dass** das Sperrelement (30) als Sperrstein ausgebildet ist, welcher in einer Sperrelementaufnahme (34) an dem Tragelement (10) in Fahrzeugbewegungsrichtung (B) bewegbar angeordnet ist.

5. Lenksäule (1) gemäß Anspruch 4, **dadurch gekennzeichnet, dass** das Sperrelement (30) durch einem Hinterschnitt (340) in der Sperrelementaufnahme (34) in einer Ruheposition gehalten wird.

6. Lenksäule (1) gemäß Anspruch 5, **dadurch gekennzeichnet, dass** zwischen dem Hinterschnitt (340) der Sperrelementaufnahme (34) und einem Halteabschnitt (342) des Sperrelements (30) ein Wälzelement (346) angeordnet ist.

7. Lenksäule (1) gemäß einem der vorstehenden Ansprüche, **dadurch gekennzeichnet, dass** das Sperrelement (30) selbsthemmend ausgebildet ist und insbesondere eine in Fahrtrichtung (B) ausgebildete Keilfläche (310) aufweist, welche mit einer Gegenkeilfläche (344) der Sperrelementaufnahme (34) im Crash-Fall in Anlage bringbar ist, um eine Selbsthemmung des Sperrelements (30) zu erreichen.

8. Lenksäule (1) gemäß einem der vorstehenden Ansprüche, **dadurch gekennzeichnet, dass** das Schaltelement (4) einen Massenkörper (44) aufweist und das Sperrelement (30) über einen Verriegelungsstift (40) in einer Ruheposition hält.

9. Lenksäule (1) gemäß Anspruch 8, **dadurch gekennzeichnet, dass** der Verriegelungsstift (40) über Wälzkörper (42) in einer Verriegelungsnut (38) des Sperrelements (30) gelagert ist.

10. Lenksäule (1) gemäß Anspruch 8 oder 9, **dadurch gekennzeichnet, dass** der Verriegelungsstift (40) über einen Hebelarm (46) mit dem Massekörper (44) verbunden ist.

11. Lenksäule (1) gemäß einem der vorstehenden Ansprüche, **dadurch gekennzeichnet, dass** mindestens zwei Verriegelungsvorrichtungen (3) vorgesehen sind, bevorzugt auf einander gegenüberliegenden Seiten des Stellelements (12).

12. Lenksäule (1) gemäß einem der vorstehenden Ansprüche, **dadurch gekennzeichnet, dass** das Eingriffsteil (32) als Energieabsorptionselement ausgestaltet ist.

## Claims

1. Steering column (1) for a motor vehicle, comprising a support element (10) and an adjusting element (12) that is displaceable relative to the support element (10) for the rotatable mounting of a steering spindle (14), comprising a locking device (3) for locking the adjusting element (12) relative to the support element (10) in the event of a crash, wherein the locking device (3) comprises a blocking element (30) arranged on the support element (10), which can be brought into engagement with an engagement part (32) of the adjusting element (12), wherein a switching element (4) is provided for bringing about the engaging of the blocking element (30) in the engagement part (32) in the event of a crash, wherein the switching element (4) brings about the engaging based on its mass inertia, wherein the movement direction of the switching element (4) is distinct from the movement direction of the blocking element (30),
**characterized**
**in that** the blocking element (30) for engaging can be moved in a direction substantially perpendicular to the axis of the steering spindle (14) .

2. Steering column (1) according to Claim 1, **characterized in that** the switching element (4) can be moved between a rest position, in which the blocking element (30) is held out of engagement with the engagement part (32), and a triggering position, in which the blocking element (30) is in engagement with the engagement part (32).

3. Steering column (1) according to either one of the preceding claims, **characterized in that** the switching element (4) is formed by the blocking element (30) and the mass inertia of the blocking element (30) brings about the engaging.

4. Steering column (1) according to any one of the preceding claims, **characterized in that** the blocking element (30) is designed as a blocking block, which is moveably arranged in the vehicle movement direction (B) in a blocking element slot (34) on the support element (10).

5. Steering column (1) according to Claim 4, **characterized in that** the blocking element (30) is held in the blocking element slot (34) in a rest position by an undercut (340).

6. Steering column (1) according to Claim 5, **characterized in that** between the undercut (340) of the blocking element slot (34) and a holding section (342) of the blocking element (30) a rolling element (346) is arranged.

7. Steering column (1) according to any one of the preceding claims, **characterized in that** the blocking element (30) is of a self-locking design and in particular comprises a wedge surface (310) formed in the in traveling direction (B), which can be brought to lie against a mating wedge surface (344) of the blocking element slot (34) in the event of a crash in order to achieve a self-locking of the blocking element (30).

8. Steering column (1) according to any one of the preceding claims, **characterized in that** the switching element (4) comprises a mass body (44) and holds the blocking element (30) in a rest position via a locking pin (40).

9. Steering column (1) according to Claim 8, **characterized in that** the locking pin (40) is mounted via rolling bodies (42) in a locking groove (38) of the blocking element (30).

10. Steering column (1) according to Claim 8 or 9, **characterized in that** the locking pin (40) is connected to the mass body (44) via a lever arm (46) .

11. Steering column (1) according to any one of the preceding claims, **characterized in that** at least two locking devices (3) are provided, preferably on sides of the adjusting element (12) located opposite one another.

12. Steering column (1) according to any one of the preceding claims, **characterized in that** the engagement part (32) is configured as energy absorption element.

## Revendications

1. Colonne de direction (1) pour un véhicule automobile, comprenant un élément de support (10) et un élément de réglage (12) déplaçable par rapport à l'élément de support (10) pour le support rotatif d'un arbre de direction (14), comprenant un dispositif de verrouillage (3) pour le verrouillage de l'élément de réglage (12) par rapport à l'élément de support (10) en cas de collision, dans laquelle le dispositif de verrouillage (3) présente un élément d'arrêt (30) disposé sur l'élément de support (10), qui peut être amené en engagement avec une partie d'engagement (32) de l'élément de réglage (12), dans laquelle il est prévu un élément de commutation (4) pour provoquer l'engagement de l'élément d'arrêt (30) dans la partie d'engagement (32) en cas de collision, dans laquelle l'élément de commutation (4) provoque l'engagement sur la base de son inertie de masse, dans laquelle la direction de déplacement de l'élément de commutation (4) est différente de la direction de déplacement de l'élément d'arrêt (30), **caractérisée en ce que** l'élément d'arrêt (30) peut être mû pour l'engagement dans une direction essentiellement perpendiculaire à l'axe de l'arbre de direction (14).

2. Colonne de direction (1) selon la revendication 1, **caractérisée en ce que** l'élément de commutation (4) peut être mû entre une position de repos, dans laquelle l'élément d'arrêt (30) est maintenu hors d'engagement avec la partie d'engagement (32), et une position de déclenchement, dans laquelle l'élément d'arrêt (30) est engagé avec la partie d'engagement (32).

3. Colonne de direction (1) selon l'une quelconque des revendications précédentes, **caractérisée en ce que** l'élément de commutation (4) est formé par l'élément d'arrêt (30), et l'inertie de masse de l'élément d'arrêt (30) provoque l'engagement.

4. Colonne de direction (1) selon l'une quelconque des revendications précédentes, **caractérisée en ce que** l'élément d'arrêt (30) est réalisé sous la forme d'une cale de blocage, qui est disposée dans un logement d'élément d'arrêt (34) sur l'élément de support (10) de façon mobile dans la direction de déplacement du véhicule (B).

5. Colonne de direction (1) selon la revendication 4, **caractérisée en ce que** l'élément d'arrêt (30) est maintenu dans une position de repos par une contre-dépouille (340) dans le logement d'élément d'arrêt (34) .

6. Colonne de direction (1) selon la revendication 5, **caractérisée en ce qu'**un élément de roulement (346) est disposé entre la contre-dépouille (340) du logement d'élément d'arrêt (34) et une partie de retenue (342) de l'élément d'arrêt (30).

7. Colonne de direction (1) selon l'une quelconque des revendications précédentes, **caractérisée en ce que** l'élément d'arrêt (30) est autobloquant et présente en particulier une face de coin (310) formée dans la direction de déplacement (B), qui peut être amenée en appui sur une face de coin opposée (344) du logement d'élément d'arrêt (34) en cas de collision, afin de réaliser un auto-blocage de l'élément d'arrêt (30).

8. Colonne de direction (1) selon l'une quelconque des revendications précédentes, **caractérisée en ce que** l'élément de commutation (4) présente un corps de masse (44) et maintient l'élément d'arrêt (30) dans une position de repos au moyen d'une tige de verrouillage (40) .

9. Colonne de direction (1) selon la revendication 8, **caractérisée en ce que** la tige de verrouillage (40) est supportée par des corps de roulement (42) dans une rainure de verrouillage (38) de l'élément d'arrêt (30).

10. Colonne de direction (1) selon la revendication 8 ou 9, **caractérisée en ce que** la tige de verrouillage (40) est reliée au corps de masse (44) par un bras de levier (46).

11. Colonne de direction (1) selon l'une quelconque des revendications précédentes, **caractérisée en ce qu'**il est prévu au moins deux dispositifs de verrouillage (3), de préférence sur des côtés opposés l'un à l'autre de l'élément de réglage (12).

12. Colonne de direction (1) selon l'une quelconque des revendications précédentes, **caractérisée en ce que** la partie d'engagement (32) est configurée comme un élément d'absorption d'énergie.
